# EUROPEAN PATENT SPECIFICATION

(11) **EP 4 407 113 B1**
(45) Date of publication and mention of the grant of the patent: **27.08.2025**
(21) Application number: 23153305.0
(22) Date of filing: 25.01.2023
(51) Int. Cl.: E04D 5/12, B29C 70/26, B29C 70/82, B32B 15/08, E04D 13/147, B29C 43/34, B29C 48/154, B29C 48/21

(54) **SHEET OF COVERING MATERIAL, USE OF SAID SHEET, BUILDING STRUCTURE COMPRISING SAID SHEET AND METHOD FOR MANUFACTURING SAID SHEET**
BAHN AUS ABDECKMATERIAL, VERWENDUNG DER BAHN, GEBÄUDESTRUKTUR MIT DER BAHN UND VERFAHREN ZUR HERSTELLUNG DER BAHN
FEUILLE DE MATÉRIAU DE REVÊTEMENT, UTILISATION DE LADITE FEUILLE, STRUCTURE DE CONSTRUCTION COMPRENANT LADITE FEUILLE ET PROCÉDÉ DE FABRICATION DE LADITE FEUILLE

(43) Date of publication of application: 31.07.2024
(73) Proprietor: Ubbink B.V., 6984 AA Doesburg (NL); Redeahold Apeldoorn B.V., 8191 JP Wapenveld (NL)
(72) Inventor: HAANAPPEL-JANSEN, Wilma, 6969 BK Drempt (NL); ROUWENHORST, Dennis Raymond, 7325 HW Apeldoorn (NL)
(74) Representative: van Dam, Vincent

(56) References cited:
- WO-A1-96/06245
- DE-A1- 102004 035 201
- DE-A1- 19 842 032
- DE-A1- 3 642 063
- US-A- 5 002 816

## Description

The present invention relates to a sheet of covering material, in particular a roof covering material, the use of said sheet as covering material, in particular for roofs, a building structure comprising a substrate, in particular a roof, covered with said sheet and a method for manufacturing said sheet.

Moist barriers on roofs or other structures of a building to prevent moist from entering a building are suitably in the form of sheets of covering material.

Sheets used in the art for this purpose often comprise lead, which is harmful for the environment and humans. More environmentally friendly alternatives have been developed in view of this. WO96/06245 discloses a roof flashing comprising a layer of polyisobutylene. DE 3642063A1 describes a method for manufacturing a lead-free sheet of roof-covering material, based on isobutylene. The sheet of DE 3642063A1 is manufactured by sandwiching an expanded metal mesh between two layers of isobutylene-based polymer. The two layers are connected to each other through the mesh of the **ex**panded metal mesh through a pressing process.

One of the advantages of using an isobutylene-based covering material is that self-adhesive isobutylene variants are available. This makes these roofing materials **di**rectly applicable for repairing and covering flat, horizontal substrates, such as flat roofs, without the need for additional adhesives.

However, although the known self-adhesive isobutylene-based roofing materials provides a sustained and reliable fixation to a substrate, the inventors have found that applying roofing material based on isobutylene on sloped or pitched substrates, such as sloped or pitched roofs, may present challenges because covering sheets may be inclined to sliding, especially in the initial stages after application.

### Summary of the invention

The invention aims to overcome the above-mentioned challenges.

This aim is achieved by the provision of a sheet of covering material, comprising a lower surface based on a self-adhering, first isobutylene-based polymer material for adherence to a substrate; an upper surface opposite to said lower surface, and one or more adhesive structures provided on said lower surface; wherein said one or more adhesive structures cover said lower surface for a minor part of said lower surface; and wherein said one or more adhesive structures are based on a material with faster adhesion characteristics with regard to said substrate than said first self-adhering isobutylene-based polymer material.

In a second aspect the invention relates to a method for manufacturing the sheet of covering material of the first aspect, comprising: providing a sheet comprising said lower surface; and applying said one or more adhesive structures on said lower surface. In view of this, the invention also relates to a sheet of covering material of the first aspect, obtainable by the method of the second aspect.

In a third aspect the invention relates to the sheet of the first aspect as covering material for a sloped substrate, in particular a sloped roof.

In a fourth aspect the invention relates to a building structure comprising a sloped substrate, in particular a roof, covered with the sheet of the first aspect.

In the sheet according to the invention the self-adhesive isobutylene-based lower surface ensures a sustained and reliable fixation to a substrate when the sheet covers the substrate, while the one or more adhesive structures are based on a material that adheres faster than the self-adhering polyisobutylene basis material of the lower surface. This ensures fast fixation in an initial stage of covering a substrate with the sheet. This is a particular advantage when the sheet is used to cover a substrate with a slope or pitch, e.g. a sloped or pitched roof. As a result of the fast fixation, the sheet is fixed in its proper position immediately after application and the risk of sliding in this initial stage before the self-adhesive basis of the lower surface is sufficiently adhered to the substrate is reduced to a minimum. In accordance, the need for temporary or supplementary fixation means to secure the sheet in its position in initial stage after application on the substrate is avoided, which makes the sheet very easy and efficient to use and apply on sloped substrates such as roofs. Due to the relatively weak initial attachment any mistake or error in application of the sheet can be easily corrected in an initial stage.

### Short description of the drawings

Fig.1 is a perspective view (A) and view from below (B) of a metal gauze with a first, second and third discharging device, showing how to operate an exemplary embodiment of the method according to the invention.
Fig.2 is a schematic representation of a cross-section of an exemplary sheet in a direction transverse (A) to the manufacturing direction and a perspective view (B) on the lower surface of said sheet.

### Detailed description of the invention

In accordance with the invention at least the lower surface of the sheet is based on isobutylene and optionally the sheet comprises multiple layers of optionally different isobutylenes. Also the one or more adhesive structures applied to the lower surface may be based on isobutylene. Isobutylene-based materials in the context of the invention may suitably be selected from a homopolymer of isobutylene or a copolymer of isobutylene. Both the homopolymers and copolymers are often referred to in the art as polyisobutylene or PIB and include synthetic rubber. The material used of the sheet is in the form of such a rubber. The isobutylene-based material may also be a copolymer of isobutylene with isoprene, which is often referred to in the art as butyl rubber, sometimes just called "butyl". The isobutylene-based material may for instance be obtained from recycling plastics, for instance from bicycle tires. Isobutylene variants are commercially available and can be selected by the skilled person on the basis of their desired properties, such as viscosity, UV resistance and tackiness.

According to the invention the sheet of covering material can be applied on a substrate. Such a substrate can be a window frame, a chimney, a skylight, a dormer window, or a roof. In a particular suitable embodiment the covering material is used as a sheet for roof covering. In view of the particular advantages when applied to sloped or pitched substrates, such as sloped or pitched roofs, the invention also relates to the use of the sheet of the invention as covering material for a sloped substrate, in particular a sloped roof. In line with this, the invention also relates to a building structure comprising a sloped substrate, in particular a roof, covered with the sheet according to the invention.

In accordance with the invention the advantages are most appreciable when the sheet is applied on a substrate with a high pitch, i.e. steeply sloped substrates, up to vertical. In that respect the sheet according to the invention is very suitable for covering sloped substrates, such as sloped roofs, with a pitch of 4:12 or higher, such as a pitch of 9:12 or higher, including up to near vertical or vertical substrates.

A further advantage of the fast initial fixation is that the substrates to be covered do not require extensive cleaning, polishing, sanding or leveling, i.e. the sheet of the invention can be used on relatively rough and/or dirty surfaces. This makes the sheet of the invention very suitable for renovating buildings.

The one or more adhesive structures configured to achieve the abovementioned fast fixation are based on a material that adheres faster to said substrate than said first self-adhering isobutylene-based polymer material that forms the majority of the lower surface. Such material can be selected from glues and adhesives known in the art, such as acrylate adhesives or adhesive tapes based on such adhesives, for instance. In this respect, the adhesive structures may be applied on the surface, but can also be integrated or embedded therein.

A major part of the lower surface should be available for adherence to said substrate directly via said first isobutylene-based polymer material in order to assure strong and durable adhesion to the substrate to which it is applied. In other words, said one or more adhesive structures should only cover said lower surface for a minor part of said surface. The term 'cover' in this context is to be understood as meaning both forming a cover over the outer surface and forming a part of the outer surface.

Depending on the adhesive properties and requirements of the one or more adhesive structures the extent to which the adhesive structures cover the lower surface of the sheet may be chosen relatively freely. In general, it is preferred to choose the area covered by said adhesive structures as small as possible while still obtaining fast and sufficiently strong initial fixation. Namely, the smaller the area covered by the one or more adhesive structures the more of the surface is available for strong and durable direct adhesion by said first isobutylene material.

Also the number, shape and distribution of said adhesive structures may be chosen freely. In a suitable embodiment said one or more adhesive structures are arranged on the lower surface as parallel strips, suitably extending in a longitudinal direction of the sheet.

The distance between the parallel strips may be chosen such that a sheet when applied to a roof is fixed to the substrate along at least two parallel strips, for instance by two parallel strips positioned close to the outer edged of the sheet in the direction of the slope of the substrate to which it is attached. This ensures fast and reliable initial fixation while a maximal area of the lower surface remains available for strong and durable fixation by the first isobutylene material.

The adhesive structures can come in any form that is capable of conferring fast adhesion properties to substrates, such as coatings or tapes. Although in case of tapes it may be possible to glue the tape to the lower surface of the sheet, advantageous use can be made of the self-adhering properties of the isobutylene, thus avoiding the need for additional adhesives or sealants.

The sheet in this context may be a single sheet or a composite sheet. A composite sheet in this respect may comprises a metal gauze reinforcement in order to provide sufficient strength and formability such that the sheet can be bent when desired and maintain its shape after application.

With regard to sheets employing a metal gauze reinforcement is noted that the pressed isobutylene-based polymer layers of the material disclosed in DE 3642063A1 are prone to delamination, in particular in the long term. In addition, pressing the layers should be done with great care to prevent a risk of forming air bubbles within the sheet. If air bubbles are present within the sheet, for instance between said isobutylene-based polymer layers, this may cause local expansion of the isobutylene based polymer substrate upon increase of temperature, which increases the risk of delamination. Furthermore, air bubbles may contain water. During a winter period this may result in freezing of the contained which may also cause damage to the sheet of roof-covering material. This is detrimental to its moist barrier capacity.

In order to overcome this, in a preferred embodiment comprising a metal gauze which is enclosed in a continuous mass of at least said first isobutylene based polymer material and a second isobutylene-based polymer material, wherein the sheet comprises a first zone of said first material on one side of the metal gauze, a second zone of said second material on the other side of the metal gauze and a contact zone between the first and second zone which comprises both the first and second material.

It is preferred that the metal gauze in the context of the invention is a stretch metal gauze, preferably a stretch aluminum gauze. The stretch metal gauze can provide reinforcement and flexibility to the sheet of covering material, causing the sheet of covering material to be easily adjusted to a surface of a substrate. For example, it allows a sheet of covering material in accordance with the invention to cover corners of a substrate, edges of a substrate or a surface of a substrate with variable height.

For purposes of processing and shaping the sheet when in use, a stretch metal gauze may be capable of a first percentage of stretch in one direction and a second percentage of stretch in a second direction perpendicular to the first direction, wherein the second percentage of stretch is higher than the first percentage, for instance a percentage of stretch of <30% in the first direction and a percentage of stretch of >80 in the second direction. In this case it is preferred that said parallel strips extend in the direction perpendicular to the direction with the highest stretch capacity, i.e. that said parallel strips extend in the first direction. This is advantageous for reliable initial fixation to a substrate.

An exemplary suitable first polyisobutylene material in this respect may be a isobutylene hot melt synthetic rubber with density (Pycnometer; 23° orienting to DIN EN ISO 2811-1) of 1,30 - 1,40 g/ml, penetration (150g cone; 20°C, 5 sec; orienting to DIN 51580) of 30 - 45 1 / 10 mm, melt index (140°C; 10 kg; 2 mm nozzle; orienting to DIN EN ISO 1133-1) of 50 - 70 ml/ 10 min and a softening point (Ring & Ball; glycerol; orienting to DIN EN 1238) of >160°C. Such materials are commercially available, for instance under the trade name Butyl 1198 from Bostik.

The above-mentioned second isobutylene-based polymer material in the context of the above may be the same as or be different from the first isobutylene-based material. As the second isobutylene-based polymer material may form the upper surface of the sheet which is exposed to external factors, it is in general preferred that it is more rigid and resilient than the first isobutylene-based polymer material. In that respect, said second isobutylene-based polymer material preferably has a higher viscosity compared to said first isobutylene-based polymer material.

The upper surface of the sheet of the invention opposite from the lower surface and thus facing away from the substrate, may be formed of the above-mentioned second isobutylene material or any other suitable additional material applied on said second isobutylene material.

The isobutylene-based polymer material and preferably the material forming the upper surface, i.e. the second polyisobutylene material, may contain additives that confer advantageous characteristics to the sheet, for instance fire resistance. For that purpose, the isobutylene-based material may comprise a fire or flame retardant.

In order to provide long term stability against weather influences it is also preferred that the second isobutylene-based polymer material is resistant to ultraviolet radiation to provide a UV resistant upper surface. An exemplary suitable UV resistant second polyisobutylene material in this respect may be a isobutylene hot melt synthetic rubber with density (Pycnometer; 23° orienting to DIN EN ISO 2811-1) of 1,30 - 1,40 g/ml, penetration (150g cone; 20°C, 5 sec; orienting to DIN 51580) of 10 - 20 1 / 10 mm, melt index (140°C; 10 kg; 2 mm nozzle; orienting to DIN EN ISO 1133-1) of 60 - 80 ml/ 10 min and a softening point (Ring & Ball; glycerol; orienting to DIN EN 1238) of >160°C. Such materials are commercially available, for instance under the trade name Butyl 1199 from Bostik.

It is also preferred that said one or more adhesive structures are also based on polyisobutylene. The inventors have found that a self-adhering, third isobutylene-based polymer material with lower viscosity at the same temperature compared to the first isobutylene-based polymer material that forms the basis of the lower surface is very suitable in this respect. In other words, the third isobutylene is more fluid than the first isobutylene at the same temperature.

Due to this lower viscosity the third isobutylene-based material will adhere fast to the substrate to which the sheet is applied, achieving a fast initial fixation on a substrate and reducing the risk of sliding, especially on sloped substrates. Although it confers fast fixation on a substrate, lower viscosity of the self-adhering polyisobutylene will also result in a relatively weak attachment to the substrate compared to a self-adhering polyisobutylene with higher viscosity, but in accordance with the invention this is fully compensated by the fact that the majority of the lower surface area exposes the first self-adhering polyisobutylene, which has higher viscosity and which will adhere to the substrate slower, but stronger and more sustainable. Further, as mentioned above, due to the relatively weak initial attachment any mistake or error in application of the sheet can be easily corrected in an initial stage. An important additional advantage of using a self-adhering, third isobutylene-based polymer material with lower viscosity compared to said first isobutylene-based polymer material as material for the one or more adhesive structures is that due to the fact that the materials are both isobutylene based, they are fully compatible. This allows to produce the sheet with said one or more adhesive structures integrated with and/or into the lower surface of the sheet, thus resulting in a continuous mass of polyisobutylene as will be explained in more detail in reference to the method for manufacturing the sheet. As a result of this, there is no risk of said one or more adhesive structures being released from the lower surface due to shear forces or other stress factors, which further increases the reliability of the initial fixation of the sheet of the invention on a surface.

An exemplary suitable third polyisobutylene material for use in the one or more adhesive structures in this respect may be a isobutylene with density (Pycnometer; 23° orienting to DIN EN ISO 2811-1) of 1,15 - 1,25 g/ml, penetration (150g cone; 20°C, 5 sec; orienting to DIN 51580) of 70 - 90 1 / 10 mm, melt volume index (140°C; 10 kg; 2 mm nozzle; orienting to DIN EN ISO 1133-1) of 55 - 75 ml/ 10 min, a viscosity (oscillation, plate /plate 140°C; 1mm gap 1 Hz; 25% sheer deformation, similar to DIN 53019 EN 3219 of approximately 475 . 10³ mPa.s. Such materials are commercially available, for instance under the trade name Butyl 1171 from Bostik.

In view of the above, a preferred embodiment of the sheet of the invention comprises a lower surface based on a self-adhering, first isobutylene-based polymer material for adherence to a substrate; a metal gauze which is enclosed in a continuous mass of said first isobutylene-based polymer material and a second isobutylene-based polymer material; and one or more adhesive structures provided on said lower surface, wherein said one or more adhesive structures cover said lower surface for a minor part of said lower surface; and wherein said one or more adhesive structures are based on a self-adhering, third isobutylene-based polymer material with lower viscosity compared to said first isobutylene-based polymer material; and wherein the sheet comprises a first zone of said first material on one side of the metal gauze, a second zone of said second material on the other side of the metal gauze and a first contact zone between the first and second zone which comprises both the first and second material; and wherein said one or more adhesive structures comprise a third zone of said third material facing away from the lower surface and a second contact zone between said third zone and said first zone, where the first and third material contact each other. In this context, the first, second and third isobutylene-based polymers may be as specified above. This embodiment provides a sheet capable of fast fixation in an initial stage of covering a substrate with the sheet, thus minimizing the risk of sliding in this initial stage and which is, moreover, not sensitive to delamination both in the long term due to the first contact zone between the first and second zone which comprises both the first and second material, as well as in an initial stage after application on a substrate due to the second contact zone between said third zone and said first zone.

In accordance with the method of the invention said one or more adhesive structures are applied on the lower surface of a sheet which exposes self-adhering isobutylene. This can be done in any suitable way, including the use of nozzles, rollers or other suitable application methods.

The sheet of the above described preferred embodiments with first, second and third isobutylene-based polymer materials can be manufactured by passing a metal gauze in its longitudinal direction between a first discharge device and a second discharge device in a transport direction while applying said first isobutylene based polymer material from said first discharge device under pressure in a line of application extending over the width of said metal gauze on one side of said metal gauze and applying the second isobutylene based polymer material from the second discharge device under pressure in a line of application extending over the width of the metal gauze on the other side of said metal gauze, wherein the position of the lines of application of said first and second isobutylene based polymer materials on both sides of said metal gauze are offset or correspond with respect to each other in the transport direction; and applying said one or more adhesive structures on the outer surface of said first isobutylene-based material from one or more third discharge devices downstream of said first discharge device, wherein it is preferred that said one or more adhesive structures are based on a self-adhering, third isobutylene-based polymer material with lower viscosity compared to said first isobutylene-based polymer material.

In order to be applied from the discharge devices the isobutylene material needs to be liquid, at least to a certain extent. This way the first and second isobutylene-based polymer materials will be applied onto the metal gauze from opposite sides of the gauze at corresponding or offset positions while the gauze moves in a direction transverse or substantially transverse to the lines of application.

Due to the combination of applied pressure and the liquid or semi-liquid state of the first and second isobutylene-based materials, the materials will protrude into the holes of the metal gauze and penetrate any space in the gauze. Any air bubbles will be eliminated this way. Moreover, as the first material enters the mesh from one side and the second material enters the mesh from the opposite side the materials will contact each other. Upon contact the materials will mix in a contact zone due to the applied pressure and their liquid state. This contact zone preferably extends between the holes in said metal gauze. As a result, a continuous mass of isobutylene-based polymer enclosing the metal gauze is obtained. Due to the mixing of the isobutylene-based polymer materials in the contact zone, the isobutylene-based polymer materials will be intimately entangled in the contact zone after curing. This way the isobutylene-based polymer mass enclosing the metal gauze in fact comprises a first zone of first material, a second zone of second material and a contact zone between the first and second zone which comprises both the first and second material, instead of separate layers of a first and second material. This makes delamination of the sheet at the position of the metal gauze impossible and ensures prolonged quality of the sheet.

The second isobutylene-based polymer material may be applied upstream or downstream from said first isobutylene-based polymer material as seen in the transport direction. In other words, one may start with applying the second material or one may start with the first material or both materials can be applied simultaneously.

In one embodiment the position of the lines of application of said first and second isobutylene-based polymer materials on both sides of said metal gauze are at corresponding positions. This embodiment is in particular suitable when the first and second isobutylene-based polymer materials have corresponding viscosity, for instance when the first and second isobutylene-based polymer materials are the same.

In another embodiment the positions of application are offset with respect to each other in the transport direction. In other words, in this embodiment the first isobutylene material is applied onto the metal gauze upstream or downstream of the position of application of the second isobutylene material. This embodiment is in particular suitable when the first and second isobutylene-based polymer materials have differing viscosity, for instance when the second isobutylene-based polymer materials has higher viscosity compared to the first material. The inventors have surprisingly found that there is no requirement to apply two isobutylene materials with different viscosity from opposite sided along a corresponding line of application, while still achieving sufficient mixing of the isobutylene-based polymer materials in the contact zone and intimately entanglement in the contact zone after curing. The inventors have in addition found that this way a thinner gauze may be used in the manufacturing process, which saves weight and facilitates applying the sheet on a substrate, because it results in a sheet with lower weight. Importantly and in addition, the opportunity to use a thinner gauze further improves the initial fixing of the sheet to a substrate. In addition, due to the lower general weight of the sheet, any risk of delamination is even further decreased.

In the above-described method the line of application of the first and second isobutylene materials extends over the width of said metal gauze. In some embodiments it may be desired that this line of application extends over part of the width of the metal gauze. In general however, it will be desirable to cover the full width of the metal gauze. Therefore, it is preferred that the line of application extends over the full width of the metal gauze. For this purpose the first and second discharge devices may suitably be in the form of nozzles extending over the full width of the metal gauze.

During application of the isobutylene-based polymer materials, the metal gauze is passed in its longitudinal direction (transport direction) between the first discharge device and second discharge device while applying the first and second isobutylene-based materials from the first and second discharge devices respectively. Preferably the gauze moves in a transport direction transverse or substantially transverse to the lines of application. The metal gauze can for instance be passed between the discharge devices using pressure rollers as known in the art for manufacturing of composite sheets. Such pressure rollers cause the metal gauze to pass between the first and second discharge device. Furthermore, the pressure roll preferably causes to keep the metal gauze under a strained condition. This way the first and second isobutylene-based polymer materials protrude into the holes of the metal gauze and penetrate any space in the gauze, such that air bubbles will be eliminated. The movement of the gauze in the longitudinal direction transverse to the lines of application results in uniform distribution of the materials in and over the mesh in order to cover the metal gauze in longitudinal direction. The thickness of the sheet and the isobutylene-based polymer portion covering the metal gauze may be dependent on the speed of movement of the metal gauze between the discharge devices. It is therefore highly preferred that the metal gauze is passed between the discharge devices with constant speed, in order to ensure optimal uniform thickness.

In the above-described method, the one or more adhesive structures can be applied on the outer surface of said first isobutylene-based material, which will form the lower surface when the eventual sheet is applied on a substrate, from one or more third discharge devices downstream of said first discharge device. In this respect, the abovementioned embodiment wherein said adhesive structures are arranged on the lower surface as parallel strips extending in a longitudinal direction of the sheet can be realized by placing discharge devices downstream of the first discharge devices, for instance in the form of a number of nozzles at positions that correspond to the intended positions of the adhesive structures, for instance two nozzles close to the outer edges of the sheet.

In accordance with the above, the application of the self-adhesive third isobutyl material of the one or more adhesive structures on the lower surface, i.e. on the exposed first isobutyl material likewise not only results in adhesion between the two materials, but also results in mixing of the first and third isobutyl material to some extent in a contact zone due to the applied pressure and their liquid or semi-liquid state. Accordingly, also these isobutylene-based polymer materials will be intimately entangled in the contact zone after curing. This makes delamination of the adhesive structures from the lower surface of the sheet impossible and ensures prolonged quality of the sheet, and reliable and strong initial adhesion to substrates. In accordance, this embodiment herewith provides a way to manufacture a sheet of covering material in a continuous process, wherein the sheet is not sensitive to delamination both in an initial stage as well as in the long term. Moreover, the formation air bubbles is prevented in an effective way without the necessity for complex equipment and manufacturing conditions.

The pressure and fluidity of the isobutylene materials applied in the method of the invention will have an influence on the uniformity of the thickness of the sheet. Regarding the fluidity, the isobutylene-based materials should be heated to an extent that allows application in liquid form, in other words above the melting point of said materials. For this purpose, both isobutylene based polymer based components are suitably heated in the range from 110 °C to 140 °C or higher depending on the melting point of the materials. The fluidity of the materials should be such that the materials can penetrate any space in the metal gauze. The temperatures may the same for all isobutylene-based materials or temperatures may differ in order to obtain the same fluidity.

The pressure should also be such that in particular the first and second isobutylene-based materials can penetrate any space in the metal gauze and should be sufficient to cause mixing of the first and second isobutylene-based materials upon contacting of oppositely applied first and second materials. For this purpose, it is preferred that the liquid first isobutylene-based polymer material and the liquid second isobutylene-based polymer material are applied onto the metal gauze at a pressure ranging from 130 to 170 bar, preferably from 140 to 160 bar, most preferably at approximately 150 bar. Under these pressures the liquid first isobutylene-based polymer materials applied from one side of the metal gauze and the third liquid isobutylene-based polymer material applied from the opposite side of the metal gauze effectively mix upon contact the mesh holes of the metal gauze, which upon curing of the isobutylene-based polymer material causes that the sheet according to the invention cannot be delaminated. Furthermore, application of the isobutylene-based polymer materials under these pressures eliminates air bubbles from the material. The pressures may be the same for both materials, but pressures may also differ in order to obtain the same fluidity.

After applying the isobutylene-based polymer materials, the materials should be allowed to solidify in order to obtain a stable sheet comprising a metal gauze enclosed in a continuous mass of a first isobutylene-based polymer material and a second isobutylene-based polymer material. This can be done by cooling down the metal gauze enclosed in the isobutylene-based polymer mass, for instance by passing the metal gauze enclosed in the isobutylene-based polymer mass through a water bath. For this purpose, pressure rollers can be used. This allows the manufacture of the sheet of the invention in a continuous process. The one or more adhesive structures may be applied before, during or after solidification. In view of the above, if the adhesive structures are based on said third isobutylene-based material, it is preferred to apply the structure(s) before full solidification to allow mixing between the first and third materials on the lower surface of the sheet to achieve optimal integration of the adhesive structures into the surface of first isobutylene-based polymer material.

After solidification a release liner can be applied on the lower surface for protection and to allow the sheet to be rolled into rolls of covering material. In this respect it is preferred that the sheet according to the invention comprises a release liner covering said lower surface and said one or more adhesive structures. The release liner may be provided with perforation lines so that the release liner can be removed in parts during application the sheet on a substrate.

### Detailed description of the drawings

The invention will now be further elucidated in the attached drawings. The following explanation is meant to illustrate and explain the invention and not to limit the claims. The scale and size ratio of the features shown in the drawings may deviate from the actual scales and ratios.

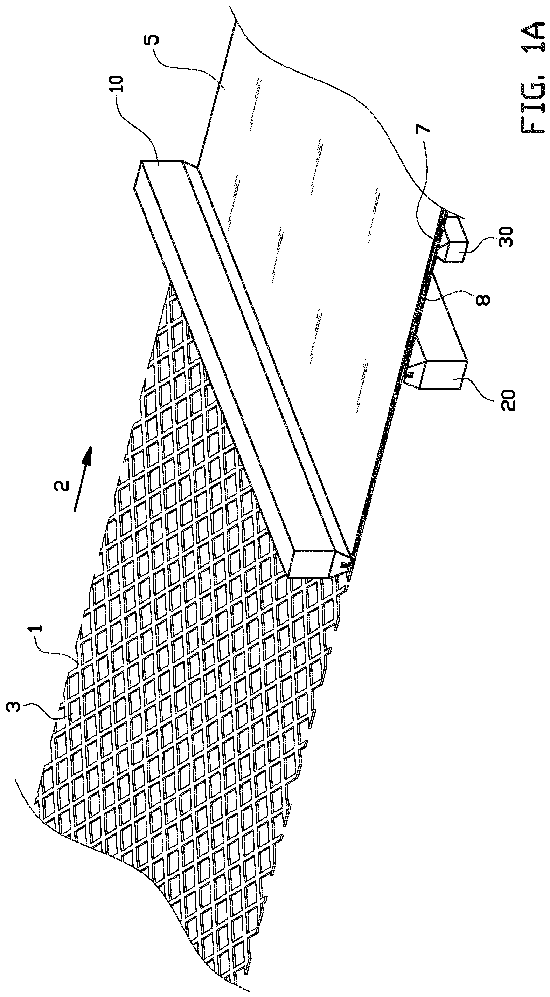

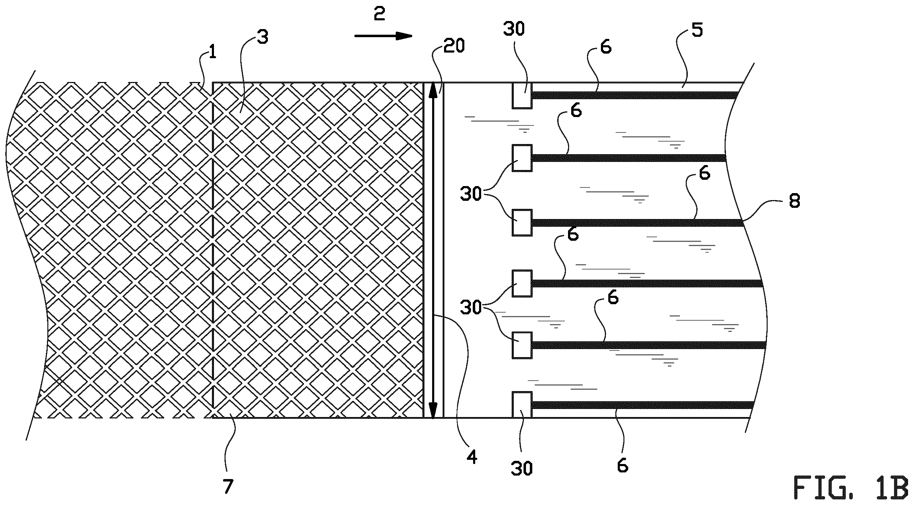

Fig. 1A is a perspective side view of a metal gauze 1 with a first discharging device 20, opposite thereto a second discharging device 10 and opposite thereto six third discharging devices 30, showing a way to operate an embodiment of the method according to the invention. In this embodiment the first discharging device 20 and third discharging devices 30 are located below the metal gauze, and the second discharging device 10 above the gauze. In another embodiment the first discharging device and third discharging devices 30 may be located above the metal gauze, and the second discharging device below the gauze. In this embodiment the first discharging device 20 is located upstream of the second discharging device 10, but this may well be the other way around. Fig. 1 B shows six third discharging devices 30 downstream of the first discharging device 20, but as an alternative a single third discharging device may be provided with six nozzles or openings to achieve the same effect.

A UV resistant isobutylene based polymer material with viscosity X is heated, such that a liquid UV resistant isobutylene based polymer material is obtained. This may for instance be a hot melt synthetic rubber with density (Pycnometer; 23° orienting to DIN EN ISO 2811-1) of 1,30 - 1,40 g/ml, penetration (150g cone; 20°C, 5 sec; orienting to DIN 51580) of 10 - 20 1 / 10 mm, melt index (140°C; 10 kg; 2 mm nozzle; orienting to DIN EN ISO 1133-1) of 60 - 80 ml/ 10 min and a softening point (Ring & Ball; glycerol; orienting to DIN EN 1238) of >160°C available under the trade name Butyl 1199 from Bostik. This liquid isobutylene-based polymer material can be transferred via a conduit (not shown) to discharge device 10. A self-adhesive further isobutylene-based polymer material with viscosity Y, wherein Y < X is also heated, such that a liquid further isobutylene-based polymer material is obtained. This material may for instance a isobutylene hot melt synthetic rubber with density (Pycnometer; 23° orienting to DIN EN ISO 2811-1) of 1,30 - 1,40 g/ml, penetration (150g cone; 20°C, 5 sec; orienting to DIN 51580) of 30 - 45 1 / 10 mm, melt index (140°C; 10 kg; 2 mm nozzle; orienting to DIN EN ISO 1133-1) of 50 - 70 ml/ 10 min and a softening point (Ring & Ball; glycerol; orienting to DIN EN 1238) of >160°C, available under the trade name Butyl 1198 from Bostik. This further liquid isobutylene-based polymer material can be transferred via a conduit (not shown) to discharge device 20, which is offset, in this case for instance up to 1 m or more downstream, with respect to the discharge device 10 in the transport direction. Discharge device 10 is used to apply the isobutylene polymer material on a side of the metal gauze 1 under pressure, while discharge device 20 applies the self-adhesive further liquid isobutylene-based polymer material on the other side of the metal gauze under pressure, while the metal gauze 1 moves in the transport direction indicated with arrow 2. The metal gauze 1 can be supplied from a supply roll (not shown). The supply roll can be rolled out by for example a pressure roller (not shown). This pressure roll causes the metal gauze 1 to pass between the discharge devices 10, 20, which results in a uniform distribution of the materials in and over the mesh 3 in order to cover the metal gauze 1 resulting in sheet 5, with an upper layer 7 and a lower layer 8. Discharge device 10 applies liquid isobutylene-based polymer material on a side of the metal gauze under pressure in a line of application extending over the width of the metal gauze, while discharge device 20 applies a further liquid isobutylene based polymer based material on the other side of the metal gauze under pressure in a downstream line of application 4. Due to the combination of applied pressure and the liquid state of the two oppositely applied isobutylene materials, the materials will protrude into the mesh 3 of the metal gauze 1 and penetrate any space in the gauze. Any air bubbles will be eliminated this way. In accordance with the present embodiment the material from the discharge device 10 enters the mesh from one side and the material from the discharge device 20 enters the mesh from the opposite side. The materials will contact and will mix in a zone of contact due to their liquid state. As a result sheet 5 comprises a continuous mass of isobutylene based polymer enclosing the metal gauze.

The fact that the discharge devices 10 and 20 and thus the positions of application are offset with respect to each other in the transport direction opens the possibility to use a relatively a thin gauze, which saves weight and facilitates processing, because it results in a sheet with lower weight.

Downstream of the discharge devices 10 and 20, a number of discharge devices 30 are positioned. Discharge devices 30 is used (as best seen in Fig. 1B) to apply an isobutylene polymer material with viscosity Z, wherein Z < Y, on the lower surface of the lower layer 8 of the sheet under pressure while the sheet moves in the transport direction indicated with arrow 2 to result in parallel strips 6 extending in a longitudinal direction of the sheet. The isobutylene material discharged from discharge devices 30 is capable of adhering fast to a substrate to which the sheet is to be applied, achieving a fast initial fixation on a substrate and reducing the risk of sliding, especially on sloped substrates and may for instance be an isobutylene with density (Pycnometer; 23° orienting to DIN EN ISO 2811-1) of 1,15 - 1,25 g/ml, penetration (150g cone; 20°C, 5 sec; orienting to DIN 51580) of 70 - 90 1 / 10 mm, melt volume index (140°C; 10 kg; 2 mm nozzle; orienting to DIN EN ISO 1133-1) of 55 - 75 ml/ 10 min, a viscosity (oscillation, plate /plate 140°C; 1mm gap 1 Hz; 25% sheer deformation, similar to DIN 53019 EN 3219 of approximately 475 x 10³ mPa.s available under the trade name Butyl 1171 from Bostik. Although adhesion strips 6 confers fast fixation on a substrate, lower viscosity of the self-adhering polyisobutylene will also result in a relatively weak attachment compared to a self-adhering polyisobutylene with higher viscosity, but in accordance with the invention this is fully compensated by the fact that the majority of the lower surface is based on the self-adhering polyisobutylene with viscosity Y and which will adhere slower, but stronger and more sustainable. After sufficient curing, the sheet may be cut in longitudinal direction to provide sheets with a pair of adhesive strips close to the edges. It is preferred that the strips are at a small distance of the edge to avoid adherence of windings along the sides of a roll when the sheet is rolled for storage and transport.

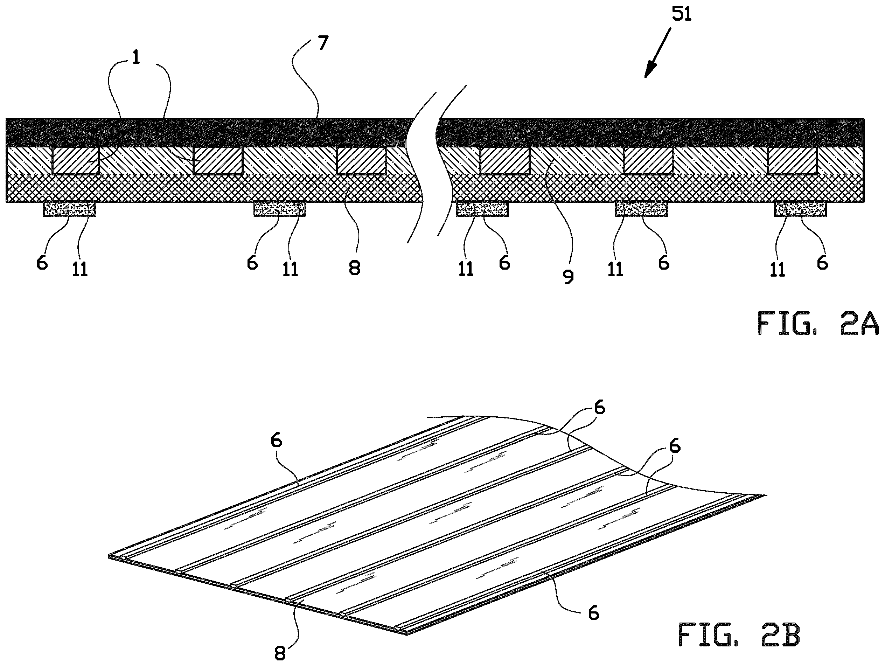

Fig.2 is a schematic representation of a cross-section of a sheet 51 in accordance with the invention in a direction transverse (A) to the manufacturing direction and a perspective view (B) on the surface intended for adherence to a substrate. By following the manufacturing procedure in accordance with the explanations for Fig.1 sheet 51 comprises a first zone 8 of self-adhesive isobutylene of lower viscosity Y on one side of the metal gauze 1 and a UV resistant second zone 7 of isobutylene with high viscosity X (wherein X > Y) on the other side of the metal gauze and a contact zone 9 between the first and second zones 8, 7 which comprises both the first and second material and which extends between the holes in said metal gauze 1. Due to the mixing of the isobutylene-based polymer materials in the contact zone 9, the isobutylene-based polymer materials are intimately entangled in the contact zone. This way delamination of the sheet is impossible and prolonged quality of the sheet is ensured. Sheet 51 also comprises parallel strips 6 of self-adhesive isobutyl material with viscosity Z extending in a longitudinal direction of the sheet to achieve fast adherence on a substrate to which the sheet is to be applied, thus reducing the risk of sliding, especially on sloped substrates. In accordance with the above, the application of the parallel strips 6 of self-adhesive isobutyl material with viscosity Z on the lower surface by means of nozzles 30, i.e. on the exposed isobutyl material with viscosity Y has resulted in mixing of the self-adhering isobutyl-based materials to some extent due to the applied pressure and their liquid or semi-liquid state. As a result said one or more adhesive structures 6 comprise a third zone of said third material facing away from the lower surface and a second contact zone 11 between said third zone and said first zone 8 where the isobutylene material of the lower layer/first zone 8 and the adhesive structures 6 contact each other. Accordingly, also these isobutylene-based polymer materials will be intimately entangled after curing. This makes delamination of the adhesive structures 6 from the lower surface of the sheet impossible and ensures prolonged quality of the sheet, and reliable and strong initial adhesion to substrates.

## Claims

1. Sheet of covering material (5, 51), comprising
a lower surface based on a self-adhering, first isobutylene-based polymer material for adherence to a substrate; said sheet of covering material being **characterized in that** it further comprises
an upper surface opposite to said lower surface,
and one or more adhesive structures (6) provided on said lower surface, wherein said one or more adhesive structures cover said lower surface for a minor part of said lower surface; and wherein said one or more adhesive structures are based on a material with faster adhesion characteristics with regard to said substrate than said first self-adhering isobutylene-based polymer material.

2. Sheet according to claim 1, comprising a metal gauze (1) which is enclosed in a continuous mass of at least said first isobutylene based polymer material and a second isobutylene-based polymer material, wherein the sheet comprises a first zone (8) of said first material on one side of the metal gauze, a second zone (7) of said second material on the other side of the metal gauze and a contact zone between the first and second zone which comprises both the first and second material.

3. Sheet according to claim 1 or 2, wherein said one or more adhesive structures (6) are based on a self-adhering, third isobutylene-based polymer material with lower viscosity compared to said first isobutylene-based polymer material.

4. Sheet of covering material according to claim 3, comprising
said lower surface (8) based on said self-adhering, first isobutylene-based polymer material for adherence to a substrate;
said metal gauze (1) which is enclosed in a continuous mass of said first isobutylene-based polymer material and said second isobutylene-based polymer material;
and said one or more adhesive structures (6) provided on said lower surface, wherein said one or more adhesive structures cover said lower surface for a minor part of said lower surface; and wherein said one or more adhesive structures are based on said self-adhering, third isobutylene-based polymer material with lower viscosity compared to said first isobutylene-based polymer material; and wherein the sheet comprises
a first zone (8) of said first material on one side of the metal gauze,
a second zone (7) of said second material on the other side of the metal gauze and
a first contact zone (9) between the first and second zone which comprises both the first and second material; and
and wherein said one or more adhesive structures comprise a third zone of said third material facing away from the lower surface and a second contact zone between said third zone and said first zone where the first and third material contact each other.

5. Sheet according to claim 1, wherein said one or more adhesive structures (6) are arranged on the lower surface as parallel strips.

6. Sheet according to claim 2 and optionally any of the previous claims, wherein the metal gauze is a stretch metal gauze, preferably wherein the stretch metal gauze is a stretch aluminum gauze.

7. Sheet according to claim 2 and optionally any of the previous claims, wherein the metal gauze is capable of a first percentage of stretch in a first direction and a second percentage of stretch in a second direction perpendicular to the first direction, wherein the second percentage of stretch is higher than the first percentage and wherein said parallel strips extend in the first direction.

8. Sheet according claim 2 and optionally any of the previous claims,
wherein said second isobutylene-based polymer material has higher viscosity compared to said first isobutylene-based polymer material; and/or
wherein the second isobutylene-based polymer material is resistant to ultraviolet radiation;
and/or wherein the second isobutylene-based polymer material contains a fire or flame retardant.

9. Method for manufacturing a sheet of covering material, comprising a lower surface based on a self-adhering, first isobutylene-based polymer material for adherence to a substrate; an upper surface opposite to said lower surface, and one or more adhesive structures provided on said lower surface, wherein said one or more adhesive structures cover said lower surface for a minor part of said lower surface; and wherein said one or more adhesive structures are based on a material with faster adhesion characteristics with regard to said substrate than said first self-adhering isobutylene-based polymer material; wherein the method comprises
- providing a sheet comprising said lower surface; and
- applying said one or more adhesive structures on said lower surface.

10. Method according to claim 9, for manufacturing a sheet of covering material according to any the claims 4 to 9, wherein the method comprises:
- passing a metal gauze in its longitudinal direction between a first discharge device and a second discharge device in a transport direction while applying said first isobutylene based polymer material from said first discharge device under pressure and in liquid form in a line of application extending over the width of said metal gauze on one side of said metal gauze and applying the second isobutylene based polymer material from the second discharge device under pressure and in liquid in a line of application extending over the width of the metal gauze on the other side of said metal gauze, wherein the position of the lines of application of said first and second isobutylene based polymer materials on both sides of said metal gauze correspond to each other or are offset with respect to each other in the transport direction;
- applying said one or more adhesive structures by applying said third isobutylene-based polymer material under pressure and in liquid form on the outer surface of said first isobutylene-based material from one or more third discharge devices downstream of said first discharge device.

11. Method according to claim 10, wherein the lines of application of said first and second isobutylene-based polymer materials on both sides of said metal gauze are at corresponding positions; and wherein the first and second isobutylene-based polymer materials have corresponding viscosity.

12. Method according to claim 10, wherein the positions of the lines of application of said first and second isobutylene-based polymer materials on both sides of said metal gauze are offset with respect to each other in the transport direction; and wherein the first and second isobutylene-based polymer materials have different viscosity.

13. Use of a sheet according to any of the claims 1 to 8, as covering material for a sloped substrate, in particular a sloped roof.

14. Building structure comprising a sloped substrate, in particular a roof, covered with the sheet according to any of the claims 1 to 8.

15. Use according to claim 13 or building structure according to claim 14, wherein said sloped substrate has a pitch of 4:12 or higher, such as 9:12 or higher.

## Patentansprüche

1. Abdeckmaterialbahn (5, 51), umfassend
eine untere Oberfläche, basierend auf einem selbsthaftenden ersten Isobutylen-basierten Polymermaterial zur Anhaftung an einem Untergrund; wobei die Abdeckmaterialbahn **dadurch gekennzeichnet ist, dass** sie ferner umfasst:
eine der unteren Oberfläche entgegensetzte obere Oberfläche,
und eine oder mehrere Klebestrukturen (6), die auf der unteren Oberfläche vorgesehen sind, wobei die eine oder die mehreren Klebestrukturen die untere Oberfläche für einen kleinen Teil der unteren Oberfläche bedecken; und wobei die eine oder die mehreren Klebestrukturen auf einem Material basieren, das in Bezug auf den Untergrund schnellere Hafteigenschaften aufweist als das erste selbsthaftende Isobutylen-basierte Polymermaterial.

2. Bahn nach Anspruch 1, umfassend ein Metallgewebe (1), das in einer kontinuierlichen Masse aus mindestens dem ersten Isobutylen-basierten Polymermaterial und einem zweiten Isobutylen-basierten Polymermaterial eingeschlossen ist, wobei die Bahn eine erste Zone (8) aus dem ersten Material auf einer Seite des Metallgewebes, eine zweite Zone (7) aus dem zweiten Material auf der anderen Seite des Metallgewebes und eine Kontaktzone zwischen der ersten und der zweiten Zone aufweist, die sowohl das erste als auch das zweite Material umfasst.

3. Bahn nach Anspruch 1 oder 2, wobei die eine oder die mehreren Klebestrukturen (6) auf einem selbsthaftenden dritten Isobutylen-basierten Polymermaterial mit geringerer Viskosität im Vergleich zum ersten Isobutylen-basierten Polymermaterial basieren.

4. Abdeckmaterialbahn nach Anspruch 3, umfassend
die untere Oberfläche (8), basierend auf dem selbsthaftenden ersten Isobutylen-basierten Polymermaterial zur Anhaftung an einem Untergrund;
das Metallgewebe (1), das in einer kontinuierlichen Masse aus dem ersten Isobutylen-basierten Polymermaterial und dem zweiten Isobutylen-basierten Polymermaterial eingeschlossen ist;
und die eine oder die mehreren Klebestrukturen (6), die auf der unteren Oberfläche vorgesehen sind, wobei die eine oder die mehreren Klebestrukturen die untere Oberfläche für einen kleinen Teil der unteren Oberfläche bedecken; und wobei die eine oder die mehreren Klebestrukturen auf einem selbsthaftenden dritten Isobutylen-basierten Polymermaterial mit geringerer Viskosität im Vergleich zum ersten Isobutylen-basierten Polymermaterial basieren; und wobei die Bahn umfasst:
eine erste Zone (8) aus dem ersten Material auf einer Seite des Metallgewebes,
eine zweite Zone (7) aus dem zweiten Material auf der anderen Seite des Metallgewebes und
eine erste Kontaktzone (9) zwischen der ersten und der zweiten Zone, die sowohl das erste als auch das zweite Material umfasst; und
wobei die eine oder die mehreren Klebestrukturen eine dritte Zone aus dem dritten Material, die von der unteren Oberfläche abgewandt ist, und eine zweite Kontaktzone zwischen der dritten Zone und der ersten Zone umfassen, wo das erste und das dritte Material einander berühren.

5. Bahn nach Anspruch 1, wobei die eine oder die mehreren Klebestrukturen (6) auf der unteren Oberfläche als parallele Streifen angeordnet sind.

6. Bahn nach Anspruch 2 und wahlweise einem der vorhergehenden Ansprüche,
wobei das Metallgewebe ein dehnbares Metallgewebe ist, vorzugsweise wobei das dehnbare Metallgewebe ein dehnbares Aluminiumgewebe ist.

7. Bahn nach Anspruch 2 und wahlweise einem der vorhergehenden Ansprüche,
wobei das Metallgewebe zu einem ersten Dehnungsprozentsatz in einer ersten Richtung und zu einem zweiten Dehnungsprozentsatz in einer zur ersten Richtung senkrechten zweiten Richtung imstande ist, wobei der zweite Dehnungsprozentsatz höher als der erste Dehnungsprozentsatz ist und wobei sich die parallelen Streifen in der ersten Richtung erstrecken.

8. Bahn nach Anspruch 2 und wahlweise einem der vorhergehenden Ansprüche,
wobei das zweite Isobutylen-basierte Polymermaterial eine höhere Viskosität im Vergleich zum ersten Isobutylen-basierten Polymermaterial aufweist; und/oder
wobei das zweite Isobutylen-basierte Polymermaterial beständig gegenüber ultravioletter Strahlung ist;
und/oder wobei das zweite Isobutylen-basierte Polymermaterial einen Brand- oder Flammenhemmer enthält.

9. Verfahren zur Herstellung einer Abdeckmaterialbahn, umfassend eine untere Oberfläche, die auf einem selbsthaftenden ersten Isobutylen-basierten Polymermaterial zur Anhaftung an einem Untergrund basiert; eine der unteren Oberfläche entgegensetzte obere Oberfläche und eine oder mehrere Klebestrukturen, die auf der unteren Oberfläche vorgesehen sind, wobei die eine oder die mehreren Klebestrukturen die untere Oberfläche für einen kleinen Teil der unteren Oberfläche bedecken; und wobei die eine oder die mehreren Klebestrukturen auf einem Material basieren, das in Bezug auf den Untergrund schnellere Hafteigenschaften aufweist als das erste selbsthaftende Isobutylen-basierte Polymermaterial; wobei das Verfahren umfasst:
- Bereitstellen einer Bahn, die die untere Oberfläche umfasst; und
- Aufbringen der einen oder der mehreren Klebestrukturen auf die untere Oberfläche.

10. Verfahren nach Anspruch 9 zur Herstellung einer Abdeckmaterialbahn nach einem der Ansprüche 4 bis 9, wobei das Verfahren umfasst:
- Durchführen eines Metallgewebes in seiner Längsrichtung zwischen einer ersten Abgabevorrichtung und einer zweiten Abgabevorrichtung in einer Transportrichtung, während das erste Isobutylen-basierte Polymermaterial von der ersten Abgabevorrichtung unter Druck und in flüssiger Form in einer Auftragslinie, die sich über die Breite des Metallgewebes erstreckt, auf einer Seite des Metallgewebes aufgebracht wird, und das zweite Isobutylen-basierte Polymermaterial von der zweiten Abgabevorrichtung unter Druck und in flüssiger Form in einer Auftragslinie, die sich über die Breite des Metallgewebes erstreckt, auf der anderen Seite des Metallgewebes aufgebracht wird, wobei die Positionen der Auftragslinien des ersten und des zweiten Isobutylen-basierten Polymermaterials auf beiden Seiten des Metallgewebes einander entsprechen oder in der Transportrichtung zueinander versetzt sind;
- Aufbringen der einen oder der mehreren Klebestrukturen durch Aufbringen des dritten Isobutylen-basierten Polymermaterials unter Druck und in flüssiger Form auf die Außenfläche des ersten Isobutylen-basierten Materials aus einer oder mehreren dritten Abgabevorrichtungen stromabwärts der ersten Abgabevorrichtung.

11. Verfahren nach Anspruch 10, wobei sich die Auftragslinien des ersten und des zweiten Isobutylen-basierten Polymermaterials auf beiden Seiten des Metallgewebe in entsprechenden Positionen befinden; und wobei das erste und das zweite Isobutylen-basierte Polymermaterial eine entsprechende Viskosität aufweisen.

12. Verfahren nach Anspruch 10, wobei die Positionen der Auftragslinien des ersten und des zweiten Isobutylen-basierten Polymermaterials auf beiden Seiten des Metallgewebes in der Transportrichtung zueinander versetzt sind; und wobei das erste und das zweite Isobutylen-basierte Polymermaterial verschiedene Viskositäten aufweisen.

13. Verwendung einer Bahn nach einem der Ansprüche 1 bis 8 als Abdeckmaterial für einen geneigten Untergrund, insbesondere ein geneigtes Dach.

14. Baukonstruktion, umfassend einen geneigten Untergrund, insbesondere ein Dach, der mit einer Bahn nach einem der Ansprüche 1 bis 8 abgedeckt ist.

15. Verwendung nach Anspruch 13 oder Baukonstruktion nach Anspruch 14, wobei der geneigte Untergrund eine Neigung von 4:12 oder höher, wie etwa 9:12 oder höher, aufweist.

## Revendications

1. - Feuille de matériau de revêtement (5, 51), comprenant
une surface inférieure reposant sur un premier matériau polymère autoadhésif à base d'isobutylène pour l'adhérence à un support ; ladite feuille de matériau de revêtement étant **caractérisée en ce qu'**elle comprend en outre
une surface supérieure opposée à ladite surface inférieure,
et une ou plusieurs structure adhésives (16) disposées sur ladite surface inférieure, dans laquelle ladite ou lesdites structures adhésives couvrent ladite surface inférieure pour une partie mineure de ladite surface inférieure ; et dans laquelle ladite ou lesdites structures adhésives reposent sur un matériau dont les caractéristiques d'adhérence vis-à-vis dudit support sont plus rapides que celles dudit premier matériau polymère autoadhésif à base d'isobutylène.

2. - Feuille selon la revendication 1, comprenant une toile métallique (1) qui est renfermée dans une masse continue d'au moins dudit premier matériau polymère à base d'isobutylène et d'un second matériau polymère à base d'isobutylène, dans laquelle la feuille comprend une première zone (8) dudit premier matériau sur un côté de la toile métallique, une seconde zone (7) dudit second matériau sur l'autre côté de la toile métallique et une zone de contact entre les première et seconde zones qui comprend les premier et second matériaux.

3. - Feuille selon la revendication 1 ou 2, dans laquelle ladite ou lesdites structures adhésives (6) reposent sur un troisième polymère autoadhésif à base d'isobutylène dont la viscosité est moins élevée que celle dudit premier matériau polymère à base d'isobutylène.

4. - Feuille de matériau de revêtement selon la revendication 3, comprenant
ladite surface inférieure (8) reposant sur ledit premier matériau polymère autoadhésif à base d'isobutylène pour l'adhérence à un support ;
ladite toile métallique (1) qui est renfermée dans une masse continue dudit premier matériau polymère à base d'isobutylène et dudit second matériau polymère à base d'isobutylène ;
et ladite ou lesdites structures adhésives (6) disposées sur ladite surface inférieure, dans laquelle ladite ou lesdites structures adhésives couvrent ladite surface inférieure pour une partie mineure de ladite surface inférieure ; et dans laquelle ladite ou lesdites structures adhésives reposent sur ledit troisième matériau polymère autoadhésif à base d'isobutylène dont la viscosité est moins élevée que celle dudit premier matériau polymère à base d'isobutylène ; et dans laquelle la feuille comprend
une première zone (8) dudit premier matériau sur un côté de la toile métallique,
une seconde zone (7) dudit second matériau sur l'autre côté de la toile métallique et
une première zone de contact (9) entre les première et seconde zones qui comprend les premier et second matériaux ; et
et dans laquelle ladite ou lesdites structures adhésives comprennent une troisième zone dudit troisième matériau orientée à l'opposé de la surface inférieure et une seconde zone de contact entre ladite troisième zone et ladite première zone où les premier et troisième matériaux sont en contact l'un avec l'autre.

5. - Feuille selon la revendication 1, dans laquelle ladite ou lesdites structures adhésives (6) sont agencées sur la surface inférieure sous forme de bandes parallèles.

6. - Feuille selon la revendication 2 et facultativement selon l'une quelconque des revendications précédentes, dans laquelle la toile métallique est une toile métallique extensible, de préférence dans laquelle la toile métallique extensible est une toile en aluminium extensible.

7. - Feuille selon la revendication 2 et facultativement selon l'une quelconque des revendications précédentes, dans laquelle la toile métallique est capable d'un premier pourcentage d'extension dans une première direction et d'un second pourcentage d'extension dans une seconde direction perpendiculaire à la première direction, dans laquelle le second pourcentage d'extension est plus élevé que le premier pourcentage et dans laquelle lesdites bandes parallèles s'étendent dans la première direction.

8. - Feuille selon la revendication 2 et facultativement selon l'une quelconque des revendications précédentes, dans laquelle ledit second matériau polymère à base d'isobutylène a une viscosité plus élevée que celle dudit premier matériau polymère à base d'isobutylène ; et/ou
dans laquelle le second matériau polymère à base d'isobutylène est résistant au rayonnement ultraviolet ;
et/ou dans laquelle le second matériau polymère à base d'isobutylène contient un ignifuge ou un matériau ignifugeant.

9. - Procédé pour fabriquer une feuille de matériau de revêtement, comprenant une surface inférieure reposant sur un premier matériau polymère autoadhésif à base d'isobutylène pour l'adhérence à un support ; une surface supérieure opposée à ladite surface inférieure, et une ou plusieurs structure adhésives disposées sur ladite surface inférieure, dans lequel ladite ou lesdites structures adhésives couvrent ladite surface inférieure pour une partie mineure de ladite surface inférieure ; et dans lequel ladite ou lesdites structures adhésives reposent sur un matériau dont les caractéristiques d'adhérence vis-à-vis dudit support sont plus rapides que celles dudit premier matériau polymère autoadhésif à base d'isobutylène ; dans lequel le procédé comprend
- la fourniture d'une feuille comprenant ladite surface inférieure ; et
- l'application de ladite ou desdites structures adhésives sur ladite surface inférieure.

10. - Procédé selon la revendication 9, pour fabriquer une feuille de matériau de revêtement selon l'une quelconque des revendications 4 à 9, dans lequel le procédé comprend :
- le passage d'une toile métallique dans sa direction longitudinale entre un premier dispositif d'évacuation et un second dispositif d'évacuation dans une direction de transport tout en appliquant ledit premier matériau polymère à base d'isobutylène depuis ledit premier dispositif d'évacuation sous pression et sous forme liquide dans une ligne d'application s'étendant sur la largeur de ladite toile métallique sur un côté de ladite toile métallique et en appliquant ledit second matériau polymère à base d'isobutylène depuis ledit second dispositif d'évacuation sous pression et sous forme liquide dans une ligne d'application s'étendant sur la largeur de la toile métallique sur l'autre côté de ladite toile métallique, dans lequel les positions des lignes d'application desdits premier et second matériaux polymères à base d'isobutylène sur les deux côtés de ladite toile métallique correspondent entre elles ou sont décalées l'une par rapport à l'autre dans la direction de transport ;
- l'application de ladite ou desdites structures adhésives en appliquant ledit troisième matériau polymère à base d'isobutylène sous pression et sous forme liquide sur la surface extérieure dudit premier matériau à base d'isobutylène depuis un ou plusieurs troisièmes dispositifs d'évacuation en aval dudit premier dispositif d'évacuation.

11. - Procédé selon la revendication 10, dans lequel les lignes d'application desdits premier et second matériaux polymères à base d'isobutylène sur les deux côtés de ladite toile métallique sont à des positions correspondantes ; et dans lequel les premier et second matériaux polymères à base d'isobutylène ont une viscosité correspondante.

12. - Procédé selon la revendication 10, dans lequel les positions des lignes d'application desdits premier et second matériaux polymères à base d'isobutylène sur les deux côtés de ladite toile métallique sont décalées l'une par rapport à l'autre dans la direction de transport ; et dans lequel les premier et second matériaux polymères à base d'isobutylène ont une viscosité différente.

13. - Utilisation d'une feuille selon l'une quelconque des revendications 1 à 8, en tant que matériau de revêtement pour un support incliné, en particulier un toit en pente.

14. - Structure de bâtiment comprenant un support incliné, en particulier un toit, recouvert de la feuille selon l'une quelconque des revendications 1 à 8.

15. - Utilisation selon la revendication 13 ou structure de bâtiment selon la revendication 14, dans laquelle ledit support incliné a une pente de 4:12 ou plus, notamment 9:12 ou plus.
